# EUROPÄISCHE PATENTSCHRIFT

(11) **EP 3 881 035 B1**
(45) Veröffentlichungstag und Bekanntmachung des Hinweises auf die Patenterteilung: **20.09.2023**
(21) Anmeldenummer: 19808538.3
(22) Anmeldetag: 31.10.2019
(51) Int. Cl.: G01F 23/296, G01F 23/28, G01N 9/00, G01N 11/16

(54) **VIBRONISCHER SENSOR MIT TEMPERATURKOMPENSATION**
VIBRONIC SENSOR WITH TEMPERATURE COMPENSATION
CAPTEUR VIBRONIQUE À COMPENSATION DE LA TEMPÉRATURE

(30) Priorität: 15.11.2018 DE 102018128734
(43) Veröffentlichungstag der Anmeldung: 22.09.2021
(73) Patentinhaber: Endress+Hauser SE+Co. KG, 79689 Maulburg (DE)
(72) Erfinder: KUHNEN, Raphael, 79418 Schliengen (DE); SANDOR, Izabella, 79650 Schopfheim (DE)
(74) Vertreter: Koslowski, Christine Adelheid
(86) Internationale Anmeldenummer: PCT/EP2019/079872
(87) Internationale Veröffentlichungsnummer: WO 2020/099141

(56) Entgegenhaltungen:
- WO-A1-2018/050595
- DE-A1-102006 007 199
- DE-A1-102016 112 308
- DE-A1-102016 124 740
- JP-A- 2004 251 823

## Beschreibung

Die Erfindung betrifft ein Verfahren zur Bestimmung und/oder Überwachung zumindest einer Prozessgröße eines Mediums mittels eines vibronischen Sensors sowie eine entsprechende Vorrichtung bzw. einen entsprechenden vibronischen Sensor. Die Vorrichtung umfasst eine mechanisch schwingfähige Einheit, eine Antriebs-/Empfangseinheit, und eine Elektronikeinheit. Die Prozessgröße ist beispielsweise gegeben durch den Füllstand, insbesondere einen Grenzstand, oder den Durchfluss des Mediums oder auch durch dessen Dichte oder Viskosität. Das Medium befindet sich beispielsweise in einem Behältnis, z. B. einem Behälter, einem Tank, oder auch in einer Rohrleitung. Das Medium selbst wiederum ist beispielsweise gegeben durch eine Flüssigkeit, ein Gas, oder ein Schüttgut.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit, zu mechanischen Schwingungen angeregt, welche wiederum beispielsweise ein piezoelektrischer Antrieb oder ein elektromagnetischer Antrieb sein kann. Entsprechende Feldgeräte werden von der Anmelderin in großer Vielfalt hergestellt und beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein. Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden, wie beispielsweise in den Dokumenten DE102006034105A1, DE102007013557A1, DE102005015547A1, DE102009026685A1, DE102009028022A1, DE102010030982A1, DE00102010030982A1 oder WO 2018 050595 A1 beschrieben.

Sowohl das Anregesignal als auch das Empfangssignal sind charakterisiert durch ihre Frequenz ω, Amplitude A und/oder Phase Φ. Entsprechend werden Änderungen in diesen Größen üblicherweise zur Bestimmung der jeweiligen Prozessgröße herangezogen. Bei der Prozessgröße kann es sich beispielsweise um einen Füllstand, einen vorgegebenen Füllstand, oder auch um die Dichte oder die Viskosität des Mediums, sowie um den Durchfluss handeln. Bei einem vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also anhand einer Frequenzverschiebung, unterschieden.

Die Dichte und/oder Viskosität wiederum lassen sich mit einem derartigen Messgerät nur ermitteln, wenn die schwingfähige Einheit vom Medium bedeckt ist. Im Zusammenhang mit der Bestimmung der Dichte und/oder Viskosität sind ebenfalls unterschiedliche Möglichkeiten aus dem Stand der Technik bekannt geworden, wie beispielswiese die in den Dokumenten DE10050299A1, DE102007043811A1, DE10057974A1, DE102006033819A1, DE102015102834A1 oder DE102016112743A1 offenbarten.

Für die Antriebs-/Empfangseinheit selbst werden insbesondere piezoelektrische und/oder elektromagnetische Antriebs-/Empfangseinheiten verwendet. Bei auf dem piezoelektrischen Effekt basierenden Antriebs-/Empfangseinheiten kann in der Regel ein vergleichsweise hoher Wirkungsgrad erzielt werden. Sie sind jedoch für den Einsatz bei hohen Temperaturen, insbesondere bei Temperaturen über 300 °C nur bedingt geeignet. Eine Alternative ist in diesem Zusammenhang gegeben durch elektromagnetische Antriebs-/Empfangseinheiten gegeben, wie beispielsweise in den Druckschriften WO2007/113011, WO2007/114950 A1, DE102015104533A1, DE102016112308A1beschrieben. Die Umwandlung elektrischer Energie in mechanische Energie erfolgt hier jeweils über ein Magnetfeld. Die beschriebenen Wandlereinheiten umfassen deshalb je zumindest eine Spule und einen Permanentmagneten. Mittels der Spule wird ein den Magnet durchsetzendes magnetisches Wechselfeld erzeugt und über den Magneten eine periodische Kraft auf die schwingfähige Einheit übertragen.

Grundsätzlich können beim Betreiben eines vibronischen Sensors die jeweils vorherrschenden Prozessbedingungen, wie die Temperatur des Mediums oder der Druck im jeweiligen Behältnis, einen großen Einfluss auf die Bestimmung der jeweiligen Prozessgröße haben. Beispielsweise weist die Frequenz des von der schwingfähigen Einheit erhaltenen Empfangssignals eine Abhängigkeit von der Temperatur auf. Um diesen Einfluss zu kompensieren, ist es aus der DE102006007199A1 oder DE102009029490A1 bekannt geworden, ein vibronisches Messgerät mit einem zusätzlichen Temperatursensor zu versehen. Die Integration eines weiteren Sensors in ein Messgerät ist allerdings grundsätzlich mit einem gewissen konstruktiven Aufwand verbunden. Eine geeignete Platzierung und Dimensionierung muss gewährleistet werden. Elektrische Kontaktierungen müssen integriert werden, und die Elektronikeinheit ist entsprechend auszugestalten.

Somit liegt der vorliegenden Erfindung die Aufgabe zugrunde, eine Möglichkeit bereitzustellen, mit welcher eine hohe Messgenauigkeit eines vibronischen Messgeräts unabhängig von vorherrschenden Prozessbedingungen erreicht werden kann.

Diese Aufgabe wird gelöst durch das Verfahren gemäß Anspruch 1 sowie durch die Vorrichtung gemäß Anspruch 8.

Die Erfindung sowie ihre vorteilhaften Ausgestaltungen werden nachfolgend anhand der Figuren Fig. 1 - Fig. 3 näher beschrieben. Es zeigt:
Fig. 1: eine Darstellung eines vibronischen Sensors gemäß Stand der Technik,
Fig. 2: zwei mögliche Ausgestaltungen eines vibronischen Sensors mit bevorzugten elektromagnetischen Antriebs-/Empfangseinheiten,
Fig. 3 die symmetrische (a) und die antisymmetrische (b) Schwingungsmode des ersten und zweiten gekoppelten Resonators des gekoppelten Schwingsystems aus Fig. 2a,
Fig. 4 ein Diagramm der beiden Resonanzfrequenzen des ersten und zweiten Resonators aus Fig. 3, und
Fig. 5 eine Illustrierung der Kompensation des Einflusses der Temperatur für einen vibronischen Sensor mit einer Antriebs-/Empfangseinheit wie in Fig. 3 dargestellt.

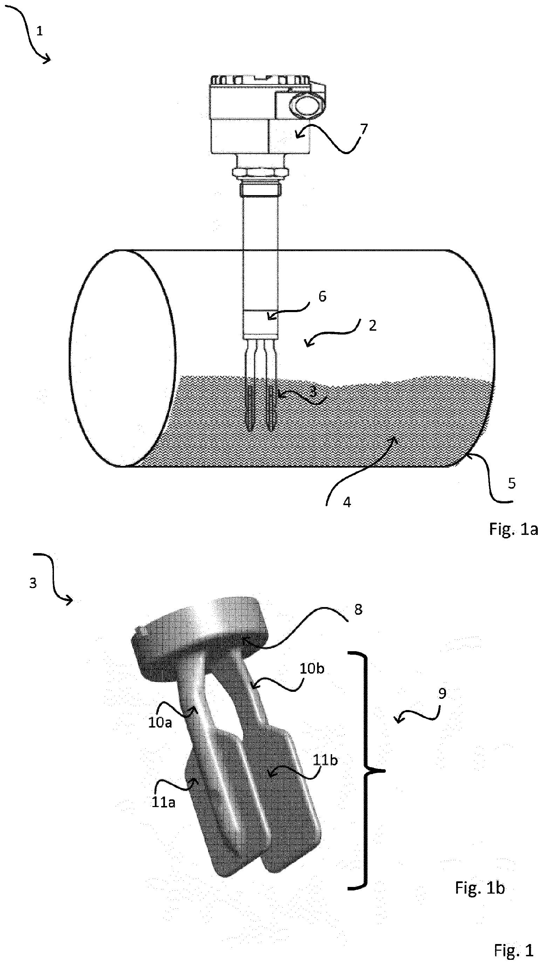

In Fig. 1a ist ein vibronisches Füllstandsmessgerät 1 gezeigt. Eine Sensoreinheit 2 mit einer mechanisch schwingfähigen Einheit 3 in Form einer Schwinggabel taucht teilweise in ein Medium 4 ein, welches sich in einem Behälter 5 befindet. Die schwingfähige Einheit 3 wird mittels der Antriebs-/Empfangseinheit 6, in der Regel einer elektromechanischen Wandlereinheit, zu mechanischen Schwingungen angeregt, und kann beispielsweise ein piezoelektrischer Stapel- oder Bimorphantrieb, aber auch eine elektromagnetische oder auch magnetostriktive Antriebs-/Empfangseinheit sein. Es versteht sich jedoch von selbst, dass auch andere Ausgestaltungen eines vibronischen Füllstandsmessgeräts möglich sind. Weiterhin ist eine Elektronikeinheit 7 dargestellt, mittels welcher die Signalerfassung, -auswertung und/oder -speisung erfolgt.

Fig. 1b zeigt nochmal eine detailliertere Ansicht einer schwingfähigen Einheit 3 in Form einer Schwinggabel, wie sie beispielsweise für den von der Anmelderin unter der Bezeichnung LIQUIPHANT vertriebenen vibronischen Sensor eingesetzt wird. Zu sehen ist eine Membran 8, und ein damit verbundene Schwingelement 9. Das Schwingelement 9 weist zwei Schwingstäbe 10a, 10b auf, an welchen endseitig jeweils ein Paddel 11a, 11b angeformt ist. Im Betrieb führt die Schwinggabel 3 Schwingungsbewegungen entsprechend der Schwingungsmode, mit welcher sie angeregt wird, aus. Jeder der beiden Schwingstäbe 10a, 10b verhält sich im Wesentlichen wie ein sogenannter Biegeschwinger. In der Grundschwingungsmode schwingen die beiden Schwingstäbe 10a, 10b beispielsweise gegenphasig zueinander.

Obgleich im Rahmen der vorliegenden Erfindung zahlreiche unterschiedliche Ausgestaltungen für die Antriebs-/Empfangseinheit 6 verwendet werden können, bezieht sich die nachfolgende Beschreibung ohne Beschränkung der Allgemeinheit auf elektromagnetische Antriebs-/Empfangseinheiten 6 mit zumindest einer Spule, wie sie in den Dokumenten DE102015104533A1 oder DE102016112308A1 beschrieben sind.

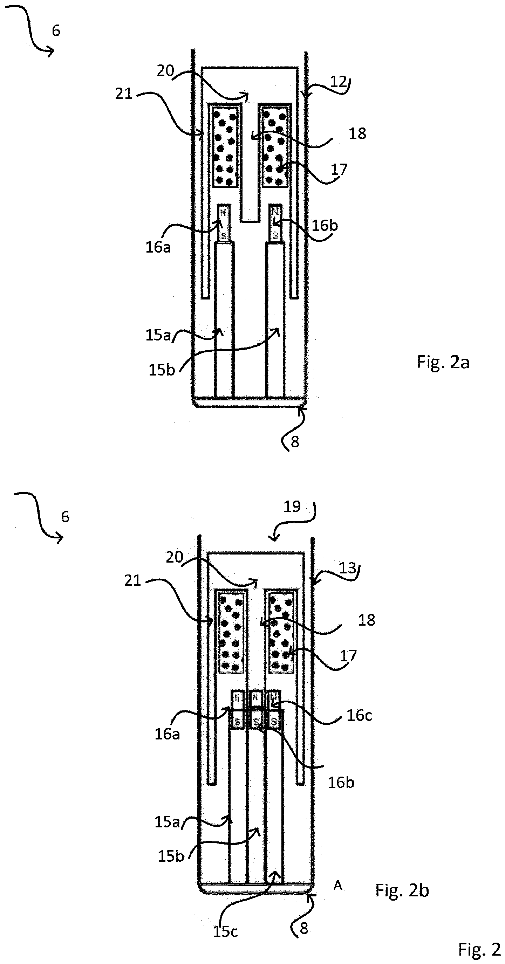

In Fig. 2a ist eine schematische Ansicht einer derartigen Antriebs-/Empfangseinheit 6 gezeigt. Ein Gehäuse 12 schließt mit der unteren Wandung mit einer Membran 8 ab, welche der schwingfähigen Einheit 3 zuzuordnen ist. Für die hier gezeigte Ausgestaltung ist das Gehäuse 12 zylinderförmig und die scheibenförmige Membran 8 hat eine kreisrunde Querschnittsfläche A. Es versteht sich jedoch von selbst, dass auch andere Geometrien denkbar sind und unter die vorliegende Erfindung fallen. Senkrecht zur Grundfläche A der Membran 8 und ins Innere des Gehäuses 12 hineinreichend sind zwei Stangen 15a, 15b an der Membran 8 befestigt. Dabei handelt es sich insbesondere um eine kraftschlüssige Verbindung. Die Grundfläche A der Membran 8 liegt dann in einer Ebene senkrecht zur Längsrichtung der Stangen 15a, 15b.

In dem der Membran 8 abgewandten Endbereich der Stangen 15a, 15b ist jeweils ein Magnet 16a, 16b insbesondere ein SmCo- oder Alnico-Magnet, befestigt. Die Magnete 16a, 16b sind bevorzugt alle gleich ausgerichtet bzw. orientiert. Oberhalb der Magnete 16a, 16b ist eine Spule 17 angeordnet, welche einen um den Kern 18 gewickelten Draht umfasst. Der Kern 18 der Spule 17 ist Teil einer topfförmigen Ankereinheit 19 mit einem Boden 20 sowie einer Umfangswandung 21. Beispielsweise kann der Boden 20 ebenso wie die Grundfläche A der Membran 8 eine kreisförmige Querschnittsfläche aufweisen. Vom Boden 20 der topfförmigen Ankereinheit 19 reicht der Kern 18 der Spule 17 in Form eines Stutzens zentrisch ins Innere der Ankereinheit 19. Die Umfangswandung 21 hat in diesem Falle dann die Funktion einer magnetischen Feldrückführung inne. Die Stangen 15a, 15b mit den Magneten 16a und 16b berühren die Spule 17 und den Kern 18 nicht. Die Spule 17 wird im fortlaufenden Betrieb zur Erzeugung eines magnetischen Wechselfeldes mit einem Wechselstromsignal beaufschlagt. Hierzu verfügt die Spule über zwei in Fig. 2a nicht gezeigte Anschlussdrähte.

Aufgrund des Wechselfeldes werden die Stangen 15a und 15b über die Magnete 16a und 16b horizontal, d. h. senkrecht oder quer zu ihrer Längsachse, ausgelenkt derart, dass sie in Schwingungen versetzt werden. Einerseits haben die Stangen 15a und 15b dann eine Hebelwirkung, durch welche die durch die horizontale Auslenkung erzeugte Biegung der Stangen 15a und 15b auf die Membran 8 übertragen wird derart, dass die Membran 8 in Schwingungen versetzt wird. Andererseits handelt es sich bei der Kombination aus den beiden Stangen 15a und 15b sowie der Membran 8 aber um einen eigenen Resonator.

Fig. 2b zeigt eine elektromechanische Wandlereinheit 6 ähnlich wie in Fig. 2a mit dem Unterschied, dass gemäß Fig. 2b drei Stangen 15a-15c sowie drei Magnete 16a-16c vorhanden sind, wie in der DE102016112308A1 offenbart. Die elektromechanische Wandlereinheit kann aber auch über vier oder mehr Stangen verfügen.

Im Falle der Ausgestaltungen aus Fig. 2 bilden die beiden Schwingstäbe 10a, 10b der mechanisch schwingfähige Einheit 3 sowie die Stangen 15a-15c der Wandlereinheit 6 jeweils mit der Membran 8 einen mechanischen Resonator. Dabei ist die Membran 8 bevorzugt, aber nicht notwendigerweise, einstückig ausgestaltet. Insbesondere kann sie sowohl der schwingfähigen Einheit 3 als auch der Wandlereinheit 6 zugeordnet werden.

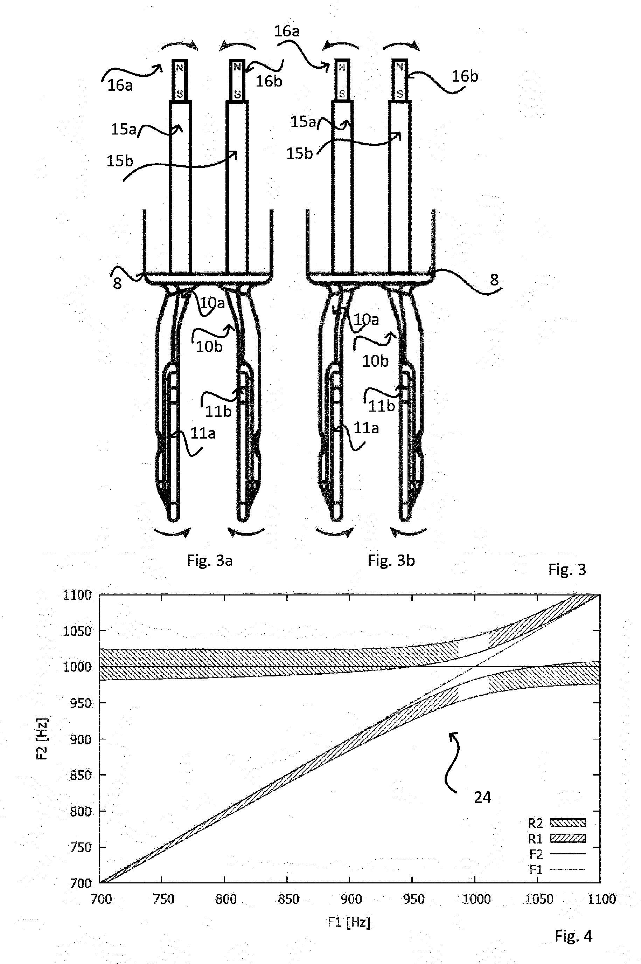

Die beiden Resonatoren sind dabei über die Membran 8 mechanisch miteinander gekoppelt, wobei die Membran 8 den Grad der Kopplung bestimmt. In einem derartig gekoppelten Resonatorsystem treten zwei Schwingungsmoden mit zwei unterschiedlichen Resonanzfrequenzen (F1, F2) auf, welche in Fig. 3 illustriert sind. Bei den beiden Schwingungsmoden handelt es sich um eine symmetrische und eine antisymmetrische Schwingungsmode. Bei der symmetrischen Schwingungsmode (Fig. 3a) schwingen die beiden Resonatoren umfassend die beiden Schwingstäbe 10a,10b bzw. die beiden Stangen 15a, 15b jeweils spiegelsymmetrisch zueinander, bezogen auf die Ebene parallel zur Grundfläche A der Membran 8. Bewegen sich also die Stangen 15a, 15b im der Membran 8 abgewandten Endbereich aufeinander zu, so bewegen sich auch die beiden Schwingstäbe 10a, 10b im Bereich der Paddel 11a, 11b aufeinander zu. Bei der antisymmetrischen Schwingungsmode (Fig. 3b) dagegen bewegen sich die Stangen 15a, 15b im der Membran 8 abgewandten Endbereich aufeinander zu, wenn sich die beiden Schwingstäbe 10a, 10b im Bereich der Paddel 11a, 11b voneinander wegbewegen. Die antisymmetrische Schwingungsmode entspricht dabei der natürlichen Schwingungsbewegung einer Schwinggabel 3 eines vibronischen Sensors. Dagegen bleibt bei der symmetrischen Schwingungsmode die Membran 8 weitegehend unbewegt.

Fig. 4 zeigt ein Diagramm, in welchem die Frequenzen der beiden Resonatoren gegeneinander aufgetragen sind. Es bezeichnet F1 die Frequenz des ersten Resonators, welcher die beiden Schwingstäbe 10a, 10b umfasst und F2 die Frequenz des zweiten Resonators, welcher die beiden Stangen 15a, 15b umfasst. Während sich die Frequenz F1 beim Eintauchen der schwingfähigen Einheit 3 in ein Medium 4 ändert, bleibt die Frequenz F2 des zweiten Resonators im Wesentlichen konstant. Die erste Frequenz F1 ist entsprechend abhängig von den Eigenschaften des Mediums 4 und kann zur Bestimmung der Prozessgröße herangezogen werden. Die zweite Frequenz F2 entsprechend einer zweiten Schwingungsmode weist dagegen nur eine vernachlässigbare Abhängigkeit vom Medium 4 auf. Sie kann vorteilhaft zur Kompensation des Einflusses der Temperatur T des Mediums 4 auf die jeweilige Messung nach einer Ausgestaltung des erfindungsgemäßen Verfahrens herangezogen werden. Die beiden Schraffuren R1 und R2 ergeben sich aufgrund der durch die Membran 8 vermittelten Kopplung zwischen den beiden Resonatoren, wobei die Breite der Schraffuren die Schwingungsamplitude des jeweiligen Resonators angibt.

Bei einem vibronischen Sensor 1 mit einer Antriebs-/Empfangseinheit 6 wie in Fig. 2 dargestellt, ergeben sich entsprechend vorteilhaft automatisch eine medienabhängige und eine medienunabhängige Schwingungsmode, derart dass der Einfluss der Temperatur T direkt kompensierbar ist. Die vorliegende Erfindung ist jedoch keineswegs auf derartige Antriebs-/Empfangseinheiten 6 beschränkt. Vielmehr lässt sich das erfindungsgemäße Verfahren auf eine Vielzahl unterschiedlich ausgestalteter Sensoren 1 anwenden. Besonders vorteilhaft sind dabei solche Ausgestaltungen, bei welchen eine medienunabhängige Schwingungsmode direkt anregbar ist.

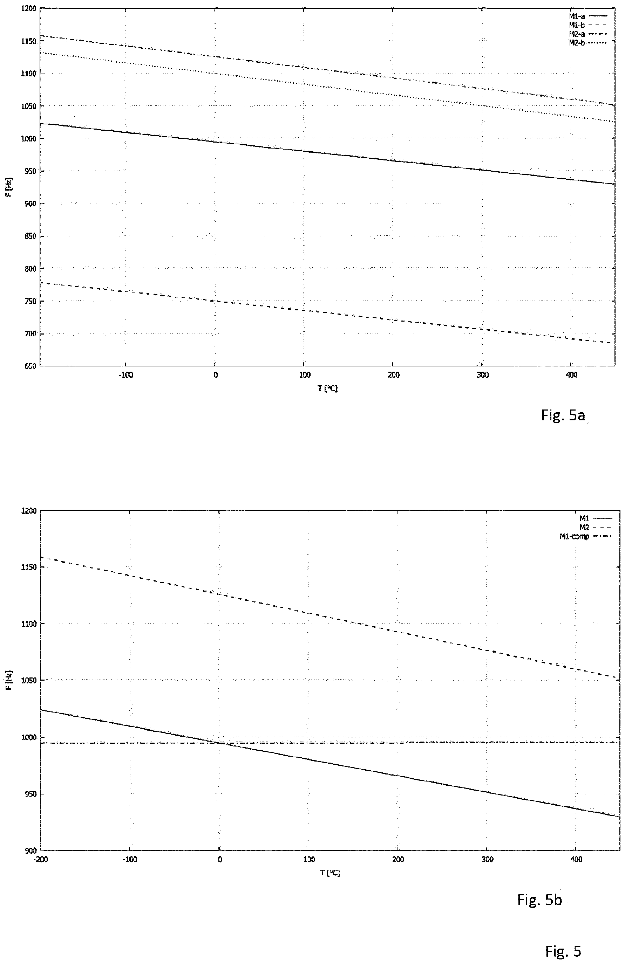

Fig. 5 illustriert schließlich eine bevorzugte Ausgestaltung zur Kompensation des Einflusses der Temperatur T für einen vibronischen Sensor 1 mit einer ersten Schwingungsmode M1 und einer zweiten Schwingungsmode M2, welche mittels eines ersten A1 und eines zweiten Anregesignals A2 erzeugt werden. In Fig. 5a sind jeweils die Frequenz f1 und f2 des ersten E1 und zweiten Empfangssignals E2 als Funktion der Temperatur T für zwei unterschiedliche Medien a und b mit unterschiedlichen Dichten p dargestellt. Für verschiedene Viskositäten der Medien gelten die hier angeführten Überlegungen analog. Die erste Schwingungsmode M1 weist lediglich eine deutliche Abhängigkeit der Frequenz f1 von der Dichte ρ des Mediums 4 auf, während im Falle der zweiten Schwingungsmode M2 eine vernachlässige Beeinflussung durch das Medium 4 zu verzeichnen ist. Das zweite Empfangssignal ist demnach näherungsweise unabhängig vom Medium. In beiden Fällen führt eine Änderung der Dichte ρ des Mediums 4 zu einer Änderung der Frequenz f1, f2 des jeweiligen Empfangssignals E1 bzw. E2 bei gleichbleibender Temperatur.

Alle vier eingezeichneten Kurven weisen ferner im Wesentlichen die gleiche Steigung auf. Die Temperatur T kann demnach anhand der Steigung der Frequenz f2 des zweiten Empfangssignals E2 kompensiert werden. Da das zweite Empfangssignal E2 nahezu unabhängig von den Eigenschaften des Mediums ist, kann eine Änderung der zweiten Frequenz f2 im Wesentlichen auf eine Änderung der Temperatur T des Mediums zurückgeführt werden.

Fig. 5b zeigt neben den Frequenzen f1 und f2 der beiden Empfangssignale E1 und E2 ferner ein temperaturkompensiertes erstes Empfangssignal E1ₖₒₘₚ der ersten Schwingungsmode M1ₖₒₘₚ. Anhand dieses Signals kann eine Bestimmung der jeweiligen Prozessgröße unabhängig von der Temperatur T des Mediums vorgenommen werden.

Um einen Einfluss des Mediums auf das zweite Empfangssignal E2 hochgenau kompensieren zu können, kann zudem eine Referenzkurve oder ein Referenzwert herangezogen werden, beispielsweise kann das zweite Empfangssignal oder die Frequenz des zweiten Empfangssignals bei bekannter Temperatur für unterschiedliche Medien ermittelt werden. Aber auch zahlreiche andere Ausgestaltungen oder Möglichkeiten zur Kompensation der Temperatur auf das erste Empfangssignal E1 sind denkbar und fallen unter die vorliegende Erfindung. Zusammenfassend ermöglicht die vorliegende Erfindung für einen vibronischen Sensor 1 eine Kompensation des Einflusses der Temperatur T des Mediums 4ohne eine Integration weiterer Komponenten zur Bestimmung. Der Einfluss der Temperatur kann im fortlaufenden Betrieb kompensiert werden, derart, dass eine temperaturunabhängige und hochgenaue Bestimmung der jeweiligen Prozessgröße möglich ist. Zudem kann die Temperatur des Mediums auch bestimmt werden. Vorteilhaft erfolgt die Temperaturkompensation und/oder -bestimmung direkt am Ort des Mediums, so dass ebenfalls eine sehr genaue und schnelle Temperaturkompensation bzw. - bestimmung möglich ist.

### Bezugszeichenliste

- 1: Vibronischer Sensor
- 2: Sensoreinheit
- 3: Schwingfähige Einheit
- 4: Medium
- 5: Behältnis
- 6: Antriebs-/Empfangseinheit
- 7: Elektronikeinheit
- 8: Membran der schwingfähigen Einheit
- 9: Schwingelement
- 10a, 10b: Schwingstäbe
- 11a, 11b: Paddel
- 12: Gehäuse der elektromechanischen Wandlereinheit
- 15a-15c: Stangen
- 16a-16c: Magnete
- 17: Spule
- 18: Kern der Spule
- 19: topfförmige Ankereinheit
- 20: Boden
- 21: Umfangsbewandung
- A: Grundfläche der Membran
- T: Temperatur des Mediums
- a,b: verschiedene Medien
- ρ: Dichte des Mediums
- F1, F2: Frequenz der symmetrischen bzw. antisymmetrischen Schwingungsmode
- A1, A2: erstes, zweites Anregesignal
- E1, E2: erstes, zweites Empfangssignal
- M1, M2: erste, zweite Schwingungsmode
- f1, f2: Frequenz des ersten bzw. zweiten Empfangssignals
- M1ₖₒₘₚ: temperaturkompensierte erste Schwingungsmode
- E1ₖₒₘₚ: temperaturkompensiertes erstes Empfangssignal

## Patentansprüche

1. Verfahren zur Bestimmung und/oder Überwachung zumindest einer Prozessgröße eines Mediums (4) mittels eines vibronischen Sensors (1), wobei
- eine mechanisch schwingfähige Einheit (3) über eine Antriebs-/Empfangseinheit (6) mittels eines ersten elektrischen Anregesignals (A1) zu mechanischen Schwingungen in einer ersten Schwingungsmode (M1) angeregt wird, wobei das erste elektrische Anregesignal (A1) und damit einhergehend die erste Schwingungsmode (M1) derart gewählt wird, dass eine Frequenz (f1) von den physikalischen und/oder chemischen Eigenschaften des Mediums (4) abhängig und eine Funktion der Dichte (p) und/oder Viskosität des Mediums (4) ist,
- die mechanischen Schwingungen der schwingfähigen Einheit (3) in der ersten Schwingungsmode (M1) empfangen und in ein erstes elektrisches Empfangssignal (E1) umgewandelt werden, und
- ausgehend vom ersten Empfangssignal (E1) das erste elektrische Anregesignal (A1) erzeugt und aus dem ersten Empfangssignal (E1) die zumindest eine Prozessgröße ermittelt wird, **dadurch gekennzeichnet, dass**
- die mechanisch schwingfähige Einheit (3) über die Antriebs-/Empfangseinheit (6) mittels eines zweiten elektrischen Anregesignals (A2) zu mechanischen Schwingungen in einer zweiten Schwingungsmode (M2) der mechanisch schwingfähigen Einheit (3) angeregt wird, wobei das zweite elektrische Anregesignal (A2) und damit einhergehend die zweite Schwingungsmode (M2) derart gewählt wird, dass eine Frequenz (f2) eines zweiten Empfangssignals (E2) in Abhängigkeit der Dichte (p) und/oder Viskosität des Mediums (4) im Wesentlichen konstant ist,
- die mechanischen Schwingungen der schwingfähigen Einheit (3) in der zweiten Schwingungsmode (M2) empfangen und in das zweite elektrische Empfangssignal (E2) umgewandelt werden, und
- ausgehend vom zweiten Empfangssignal (E2) das zweite elektrische Anregesignal (A2) erzeugt und anhand des zweiten Empfangssignals (E2) ein Einfluss der Temperatur (T) des Mediums (4) auf das erste Empfangssignal (E1) kompensiert wird.

2. Verfahren nach Anspruch 1,
wobei das erste (A1) und das zweite elektrische Anregesignal (A2) gleichzeitig erzeugt werden, derart dass die mechanischen Schwingungen der schwingfähigen Einheit (3) in der ersten (M1) und zweiten Schwingungsmode (M2) einander überlagert sind.

3. Verfahren nach Anspruch 1,
wobei das erste (A1) und das zweite elektrische Anregesignal (A2) abwechselnd, insbesondere sequentiell, erzeugt werden.

4. Verfahren nach einem der vorherigen Ansprüche,
wobei die Temperatur (T) des Mediums (4) anhand des zweiten Empfangssignals (E2) bestimmt wird.

5. Verfahren nach einem der vorherigen Ansprüche,
wobei die Frequenz (f2) des zweiten Empfangssignals (E2) ermittelt wird, und wobei der Einfluss der Temperatur (T) anhand einer Änderung der Frequenz (f2) des zweiten Empfangssignals (E2) ermittelt wird.

6. Verfahren nach einem der vorherigen Ansprüche,
wobei eine Referenzkurve und/oder ein Referenzwert für das zweite Empfangssignal (E2) und/oder einer daraus abgeleiteten Größe (f2) zur Kompensation des Einflusses der Temperatur (T) herangezogen wird.

7. Verfahren nach den Ansprüchen 6,
wobei anhand der Referenzkurve und/oder des Referenzwerts für das zweite Empfangssignal (E2) und/oder der daraus abgeleiteten Größe (f2) ein Einfluss der Dichte (p) und/oder der Viskosität auf das zweite Empfangssignal (E2) kompensiert wird, bevor das zweite Empfangssignal (E2) zur Kompensation des Einflusses der Temperatur (T) herangezogen wird.

8. Vorrichtung (1) zur Bestimmung und/oder Überwachung zumindest einer Prozessgröße eines Mediums (4) umfassend
- eine mechanisch schwingfähige Einheit (3),
- eine Antriebs-/Empfangseinheit (6), und
- eine Elektronikeinheit (7),
wobei die Antriebs-/Empfangseinheit (6) dazu ausgestaltet ist, die mechanisch schwingfähige Einheit (3) mittels eines ersten elektrischen Anregesignals (A1) zu mechanischen Schwingungen in einer ersten Schwingungsmode (M1) anzuregen und die mechanischen Schwingungen der schwingfähigen Einheit (3) in der ersten Schwingungsmode (M1) zu empfangen und in ein erstes elektrisches Empfangssignal (E1) umzuwandeln, und
wobei die Elektronikeinheit (7) dazu ausgestaltet ist, ausgehend vom ersten Empfangssignal (E1) das erste elektrische Anregesignal (A1) zu erzeugen, und aus dem ersten Empfangssignal (E1) die zumindest eine Prozessgröße zu ermitteln,
**dadurch gekennzeichnet, dass** die Antriebs-/Empfangseinheit (6) dazu ausgestaltet ist, die mechanisch schwingfähige Einheit (3) mittels eines zweiten elektrischen Anregesignals (A2) zu mechanischen Schwingungen in einer zweiten Schwingungsmode (M2) anzuregen und die mechanischen Schwingungen der schwingfähigen Einheit (3) in der zweiten Schwingungsmode (M2) zu empfangen und in ein zweites elektrisches Empfangssignal (E2) umzuwandeln, und
wobei die Elektronikeinheit (7) dazu ausgestaltet ist, ausgehend vom zweiten Empfangssignal (E2) das zweite elektrische Anregesignal (A2) zu erzeugen, und anhand des zweiten Empfangssignals (E2) ein Einfluss der Temperatur (T) des Mediums (4) auf das erste Empfangssignal (E1) zu kompensieren.

9. Vorrichtung (1) nach Anspruch 8,
wobei es sich bei der schwingfähigen Einheit (3) um eine Membran, um einen Einstab oder um eine Schwinggabel handelt.

10. Vorrichtung (1) nach Anspruch 8 oder 9,
wobei es sich bei der Prozessgröße um einen, insbesondere vorgebbaren, Füllstand, die Dichte oder die Viskosität des Mediums (4) handelt.

11. Vorrichtung (1) nach einem der Ansprüche 8-10,
wobei die Antriebs-/Empfangseinheit (6) zumindest umfasst:
- eine in mechanische Schwingungen versetzbare Membran (8),
- zwei senkrecht zu einer Grundfläche (A) der Membran (8) an der Membran (8) befestigte Stangen (15a,15b),
- ein Gehäuse (12), wobei die Membran (8) zumindest einen Teilbereich einer Wandung des Gehäuses (12) bildet, und wobei die beiden Stangen (15a, 15b) ins Gehäuseinnere (12) hineinreichen,
- zwei Magnete (16a,16b), wobei jeweils ein Magnet (16a,16b) in dem der Membran (8) abgewandten Endbereich jeweils einer der beiden Stangen (15a,15b) befestigt ist, und
- eine Spule (17) mit Kern (18), welche innerhalb des Gehäuses (12) oberhalb der Magnete (16a,16b) befestigt ist, und welche Spule (17) mit einem elektrischen Wechselstromsignal beaufschlagbar ist,
wobei die Spule (17) dazu ausgestaltet ist, ein Magnetfeld zu erzeugen, welches Magnetfeld die beiden Stangen (15a,15b) mittels der beiden Magnete (16a,16b) in mechanische Schwingungen versetzt, und
wobei die beiden Stangen (15a,15b) derart an der Membran (8) befestigt sind, dass aus den Schwingungen der beiden Stangen (15a,15b) Schwingungen der Membran (8) resultieren.

12. Vorrichtung (1) nach einem der Ansprüche 8-10,
wobei die Antriebs-/Empfangseinheit (6) zumindest umfasst:
- eine in mechanische Schwingungen versetzbare Membran (8),
- zumindest drei senkrecht zu einer Grundfläche (A) der Membran an der Membran (8) befestigte Stangen (15a-15c),
- ein Gehäuse (12), wobei die Membran (8) zumindest einen Teilbereich einer Wandung des Gehäuses (12) bildet, und wobei die Stangen (15a-15c) ins Gehäuseinnere hineinreichen,
- zumindest drei Magnete (16a-16c), wobei jeweils ein Magnet (16a-16c) in dem der Membran (8) abgewandten Endbereich an jeder der zumindest drei Stangen (15a-15c) befestigt ist, und
- eine Spule (17) mit Kern (18), welche innerhalb des Gehäuses (12) oberhalb der Magnete (16a-16c) befestigt ist, und welche Spule (17) mit einem elektrischen Wechselstromsignal beaufschlagbar ist,
wobei die Spule (17) dazu ausgestaltet ist, ein Magnetfeld zu erzeugen, welches Magnetfeld die Stangen (15a-15c) mittels der Magnete (16a-16c) in mechanische Schwingungen versetzt,
wobei die Stangen (15a-15c) derart an der Membran (8) befestigt sind, dass aus den Schwingungen der Stangen (16a-16c) Schwingungen der Membran (8) resultieren,
**dadurch gekennzeichnet,**
**dass** zumindest eine der Stangen (15a-15c) im Wesentlichen an einem Ort entlang der Grundfläche (A) der Membran (8) an der Membran (8) befestigt ist,
an welchem Ort die zweite Ableitung der Auslenkung der Membran (8) aus einer Ruheposition, als Funktion des Orts auf der Grundfläche (A) im Wesentlichen null ist.

## Claims

1. A method for determining and/or monitoring at least one process variable of a medium (4) using a vibronic sensor (1), wherein
- a unit that can mechanically oscillate (3) is made to mechanically oscillate in a first oscillation mode (M1) by a drive/receiving unit (6) using a first electrical excitation signal (A1), wherein the first electrical excitation signal (A1) and, accordingly, the first oscillation mode (M1) are selected in such a way that a frequency depends on the physical and/or chemical properties of the medium (4) and is a function of the density (p) and/or viscosity of the medium (4),
- the mechanical oscillations of the unit that can oscillate (3) are received in the first oscillation mode (M1) and converted into a first electrical received signal (E1), and
- the first electrical excitation signal (A1) is generated from the first received signal (E1) and the at least one process variable is determined from the first received signal (E1),
**characterized in that**
- the unit that can mechanically oscillate (3) is made to mechanically oscillate in a second oscillation mode (M2) of the unit that can mechanically oscillate (3) by the drive/receiving unit (6) using a second electrical excitation signal (A2), wherein the second electrical excitation signal (A2) and, accordingly, the second oscillation mode (M2) are selected in such a way that a frequency (f2) of a second received signal (E2) is mainly constant depending on the density (p) and/or viscosity of the medium (4),
- the mechanical oscillations of the unit that can oscillate (3) are received in the second oscillating mode (M2) and converted into the second electrical received signal (E2),
and
- the second electrical excitation signal (A2) is generated from the second received signal (E2),
and an influence of the temperature (T) of the medium (4) on the first received signal (E1) is compensated for using the second received signal (E2).

2. The method as claimed in claim 1,
wherein the first (A1) and the second electrical excitation signals (A2) must be generated simultaneously in such a way that the mechanical oscillations of the unit that can oscillate (3) are superimposed on each other in the first (M1) and second oscillation modes (M2).

3. The method as claimed in claim 1,
wherein the first (A1) and the second electrical excitation signals (A2) are generated alternately, in particular sequentially.

4. The method as claimed in one of the preceding claims,
wherein the temperature (T) of the medium (4) is determined using the second received signal (E2).

5. The method as claimed in one of the preceding claims,
where the frequency (f2) of the second received signal (E2) is determined, and wherein the influence of the temperature (T) is determined using a change of the frequency (f2) of the second received signal (E2).

6. The method as claimed in one of the preceding claims,
wherein a reference curve and/or a reference value for the second received signal (E2) and/or a variable derived therefrom (f2) are used to compensate for the influence of the temperature (T).

7. The method as claimed in claim 6,
wherein the reference curve and/or the reference value for the second received signal (E2) and/or the variable derived therefrom (f2) are used to compensate for an influence of the (p) and/or the viscosity on the second received signal (E2) before the second received signal (E2) is used to compensate for the influence of the temperature (T).

8. A device (1) for determining and/or monitoring at least one process variable of a medium (4), comprising
- a unit that can mechanically oscillate (3),
- a drive/receiving unit (6), and
- an electronic unit (7),
wherein the drive/receiving unit (6) is configured to cause the unit that can mechanically oscillate (3) to mechanically oscillate in a first oscillation mode (M1) using a first electrical excitation signal (A1) and to receive the mechanical oscillations of the unit that can mechanically oscillate (3) in the first oscillation mode (M1) and to convert these into a first electrical received signal (E1), and wherein the electronic unit (7) is configured to generate the first electrical excitation signal (A1) from the first received signal (E1), and to determine the at least one process variable from the first received signal (E1), **characterized in that**
the drive/receiving unit (6) is configured to cause the unit that can mechanically oscillate (3) to mechanically oscillate in a second oscillation mode (M2) using a second electrical excitation signal (A2) and to receive the mechanical oscillations of the unit that can mechanically oscillate (3) in the second oscillation mode (M2) and to convert these into a second electrical received signal (E2), and wherein the electronic unit (7) is configured to generate the second electrical excitation signal (A2) from the second received signal (E2), and to compensate for an influence of the temperature (T) of the medium (4) on the first received signal (E1) using the second received signal (E2).

9. The device (1) as claimed in claim 8,
wherein the unit that can oscillate (3) is a membrane, a single bar or an oscillating fork.

10. The device (1) as claimed in claim 8 or 9,
wherein the process variable is a, particularly prespecifiable, fill level, the density or the viscosity of the medium (4).

11. The device (1) as claimed in one of claims 8 to 10,
wherein the drive/receiving unit (6) comprises at least:
- A membrane which can be made to mechanically oscillate (8),
- two bars (15a, 15b) which are attached to the membrane (8) perpendicular to a base surface (A) of the membrane (8),
- a housing (12), wherein the membrane (8) forms at least a partial area of a wall of the housing (12), and wherein the two bars (15a, 15b) extend into the interior of the housing (12),
- two magnets (16a, 16b), wherein each magnet (16a, 16b) has one of the two bars (15a, 15b) attached in the end area facing away from the membrane (8), and
- a coil (17) with core (18) which is attached inside the housing (12) above the magnets (16a, 16b), it being possible to apply an electrical alternating current signal to the coil (17),
wherein the coil (17) is configured to generate a magnetic field, said magnetic field causing the two bars (15a, 15b) to mechanically oscillate using the two magnets (16a, 16b), and
wherein the two bars (15a, 15b) are attached to the membrane (8) in such a way that the oscillations of the two bars (15a, 15b) cause the membrane (8) to oscillate.

12. The device (1) as claimed in one of claims 8 to 10,
wherein the drive/receiving unit (6) comprises at least:
- A membrane which can be made to mechanically oscillate (8),
- at least three bars (15a-15c) which are attached to the membrane perpendicular to a base surface (A) of the membrane (8),
- a housing (12), wherein the membrane (8) forms at least a partial area of a wall of the housing (12), and wherein the bars (15a-15c) extend into the interior of the housing,
- at least three magnets (16a-16c), wherein each magnet (16a-16c) has one of the at least three bars (15a-15c) attached in the end area facing away from the membrane (8), and
- a coil (17) with core (18) which is attached inside the housing (12) above the magnets (16a-16c), it being possible to apply an electrical alternating current signal to said coil (17),
wherein the coil (17) is configured to generate a magnetic field, said magnetic field causing the bars (15a-15c) to mechanically oscillate using the magnets (16a-16c),
wherein the bars (15a-15c) are attached to the membrane (8) in such a way that the oscillations of the bars (16a-16c) cause the membrane (8) to oscillate,
**characterized in that**
at least one of the bars (15a-15c) is mainly attached to the membrane (8) at a location along the base surface (A) of the membrane (8),
at which location the second derivative of the deflection of the membrane (8) from a rest position as a function of the location on the base surface (A) is substantially zero.

## Revendications

1. Procédé destiné à la détermination et/ou à la surveillance d'au moins une grandeur de process d'un produit (4) au moyen d'un capteur vibronique (1), procédé pour lequel
- une unité apte à vibrer mécaniquement (3) est excitée par l'intermédiaire d'une unité d'entraînement/de réception (6) au moyen d'un premier signal d'excitation électrique (A1) en vibrations mécaniques dans un premier mode de vibration (M1), le premier signal d'excitation électrique (A1) et, en conséquence, le premier mode de vibration (M1) étant choisis de telle sorte que la fréquence (f1) dépende des propriétés physiques et/ou chimiques du produit (4) et soit une fonction de la densité (ρ) et/ou de la viscosité du produit (4),
- les vibrations mécaniques de l'unité apte à vibrer (3) étant reçues dans le premier mode de vibration (M1) et converties en un premier signal de réception électrique (E1), et
- à partir du premier signal de réception (E1), on génère le premier signal d'excitation électrique (A1) et, à partir du premier signal de réception (E1), on détermine l'au moins une grandeur de process,
**caractérisé en ce que**
- l'unité apte à vibrer mécaniquement (3) est excitée par l'intermédiaire de l'unité d'entraînement/de réception (6) au moyen d'un deuxième signal d'excitation électrique (A2) en vibrations mécaniques dans un deuxième mode de vibration (M2) de l'unité apte à vibrer mécaniquement (3), le deuxième signal d'excitation électrique (A2) et, en conséquence, le deuxième mode de vibration (M2) étant choisis de telle sorte que la fréquence (f2) d'un deuxième signal de réception (E2) soit pour l'essentiel constante en fonction de la densité (ρ) et/ou de la viscosité du produit (4),
- les vibrations mécaniques de l'unité apte à vibrer (3) étant reçues dans le deuxième mode de vibration (M2) et converties en un deuxième signal de réception électrique (E2), et
- à partir du deuxième signal de réception (E2), le deuxième signal d'excitation électrique (A2) est généré et, à l'aide du deuxième signal de réception (E2), une influence de la température (T) du produit (4) sur le premier signal de réception (E1) est compensée.

2. Procédé selon la revendication 1,
pour lequel le premier (A1) et le deuxième (A2) signal d'excitation électrique sont générés simultanément de telle sorte que les vibrations mécaniques de l'unité apte à vibrer (3) sont superposées l'une à l'autre dans le premier (M1) et le deuxième mode de vibration (M2).

3. Procédé selon la revendication 1,
pour lequel le premier (A1) et le deuxième (A2) signal d'excitation électrique sont générés en alternance, notamment de manière séquentielle.

4. Procédé selon l'une des revendications précédentes,
pour lequel la température (T) du produit (4) est déterminée à l'aide du deuxième signal de réception (E2).

5. Procédé selon l'une des revendications précédentes,
pour lequel la fréquence (f2) du deuxième signal de réception (E2) est déterminée, et l'influence de la température (T) est déterminée à l'aide d'une modification de la fréquence (f2) du deuxième signal de réception (E2).

6. Procédé selon l'une des revendications précédentes,
pour lequel on utilise une courbe de référence et/ou une valeur de référence pour le deuxième signal de réception (E2) et/ou une grandeur (f2) qui en est dérivée pour compenser l'influence de la température (T).

7. Procédé selon la revendication 6,
pour lequel, à l'aide de la courbe de référence et/ou de la valeur de référence pour le deuxième signal de réception (E2) et/ou de la grandeur (f2) qui en est dérivée, une influence de la densité (ρ) et/ou de la viscosité sur le deuxième signal de réception (E2) est compensée avant que le deuxième signal de réception (E2) ne soit utilisé pour compenser l'influence de la température (T).

8. Dispositif (1) destiné à la détermination et/ou à la surveillance d'au moins une grandeur de process d'un produit (4),
lequel dispositif comprend
- une unité apte à vibrer mécaniquement (3),
- une unité d'entraînement/de réception (6), et
- une unité électronique (7),
l'unité d'entraînement/de réception (6) étant conçue pour exciter l'unité apte à vibrer mécaniquement (3) au moyen d'un premier signal d'excitation électrique (A1) en vibrations mécaniques dans un premier mode de vibration (M1) et pour recevoir les vibrations mécaniques de l'unité apte à vibrer (3) dans le premier mode de vibration (M1) et les convertir en un premier signal de réception électrique (E1), et
l'unité électronique (7) étant conçue pour générer le premier signal d'excitation électrique (A1) à partir du premier signal de réception (E1), et pour déterminer l'au moins une grandeur de process à partir du premier signal de réception (E1),
**caractérisé en ce que**
l'unité d'entraînement/de réception (6) est conçue pour exciter l'unité apte à vibrer mécaniquement (3) au moyen d'un deuxième signal d'excitation électrique (A2) en vibrations mécaniques dans un deuxième mode de vibration (M2) et pour recevoir les vibrations mécaniques de l'unité apte à vibrer (3) dans le deuxième mode de vibration (M2) et les convertir en un deuxième signal de réception électrique (E2), et
l'unité électronique (7) étant conçue pour générer, à partir du deuxième signal de réception (E2), le deuxième signal d'excitation électrique (A2), et pour compenser, à l'aide du deuxième signal de réception (E2), une influence de la température (T) du produit (4) sur le premier signal de réception (E1).

9. Dispositif (1) selon la revendication 8,
pour lequel l'unité apte à vibrer (3) est une membrane, une tige unique ou une fourchette vibrante.

10. Dispositif (1) selon la revendication 8 ou 9,
pour lequel la grandeur de process est un niveau, notamment prédéfinissable, la densité ou la viscosité du produit (4).

11. Dispositif (1) selon l'une des revendications 8 à 10,
pour lequel l'unité d'entraînement/de réception (6) comprend au moins :
- une membrane (8) pouvant être mise en vibrations mécaniques,
- deux tiges (15a, 15b) fixées à la membrane (8) perpendiculairement à une surface de base (A) de la membrane (8),
- un boîtier (12), la membrane (8) formant au moins une zone partielle d'une paroi du boîtier (12), et les deux tiges (15a, 15b) pénétrant à l'intérieur du boîtier (12),
- deux aimants (16a, 16b), un aimant (16a, 16b) étant fixé dans la zone d'extrémité opposée à la membrane (8) de chacune des deux tiges (15a, 15b), et
- une bobine (17) avec un noyau (18), laquelle bobine est fixée à l'intérieur du boîtier (12) au-dessus des aimants (16a, 16b), et laquelle bobine (17) peut être alimentée par un signal électrique à courant alternatif,
la bobine (17) étant conçue pour générer un champ magnétique, lequel champ magnétique fait vibrer mécaniquement les deux tiges (15a, 15b) au moyen des deux aimants (16a, 16b), et
les deux tiges (15a, 15b) étant fixées à la membrane (8) de telle sorte que des vibrations de la membrane (8) résultent des vibrations des deux tiges (15a, 15b).

12. Dispositif (1) selon la revendication 8 à 10,
pour lequel l'unité d'entraînement/de réception (6) comprend au moins :
- une membrane (8) pouvant être mise en vibrations mécaniques,
- au moins trois tiges (15a-15c) fixées à la membrane (8) perpendiculairement à une surface de base (A) de la membrane,
- un boîtier (12), la membrane (8) formant au moins une zone partielle d'une paroi du boîtier (12), et les tiges (15a-15c) pénétrant à l'intérieur du boîtier,
- au moins trois aimants (16a-16c), un aimant (16a-16c) étant respectivement fixé dans la zone d'extrémité opposée à la membrane (8) sur chacune des au moins trois tiges (15a-15c), et
- une bobine (17) avec un noyau (18), laquelle bobine est fixée à l'intérieur du boîtier (12) au-dessus des aimants (16a-16c), et laquelle bobine (17) peut être alimentée par un signal électrique à courant alternatif, la bobine (17) étant conçue pour générer un champ magnétique, lequel champ magnétique fait vibrer mécaniquement les tiges (15a-15c) au moyen des aimants (16a-16c),
les tiges (15a-15c) étant fixées à la membrane (8) de telle sorte que des vibrations de la membrane (8) résultent des vibrations des tiges (16a-16c),
**caractérisé en ce qu'**
au moins une des tiges (15a-15c) est fixée à la membrane (8) pour l'essentiel à un endroit le long de la surface de base (A) de la membrane (8), endroit auquel la dérivée seconde de la déviation de la membrane (8) - à partir d'une position de repos, en tant que fonction de l'endroit sur la surface de base (A) - est pour l'essentiel nulle.
